# EUROPEAN PATENT SPECIFICATION

(11) **EP 2 721 135 B1**
(45) Date of publication and mention of the grant of the patent: **12.08.2015**
(21) Application number: 12731343.5
(22) Date of filing: 15.06.2012
(51) Int. Cl.: C11D 3/34, C11D 3/37, C11D 3/40, C11D 3/42, C11D 17/06

(54) **INCORPORATION OF DYE INTO GRANULAR LAUNDRY COMPOSITION**
EINBRINGUNG VON FARBSTOFF IN EINE GRANULATWASCHMITTELZUSAMMENSETZUNG
INCORPORATION D'UN COLORANT DANS UNE COMPOSITION DE LESSIVE GRANULAIRE

(30) Priority: 17.06.2011 IN MM17642011; 01.08.2011 EP 11176080
(43) Date of publication of application: 23.04.2014
(73) Proprietor: Unilever PLC, London, Greater London EC4Y 0DY (GB); Unilever N.V., 3013 AL Rotterdam (NL)
(72) Inventor: BATCHELOR, Stephen, Norman, Bebington Wirral Merseyside CH63 3JW (GB); KOHLI, Gurpreet, Singh, Mumbai 400 099 (IN); PATHAK, Gaurav, Mumbai 400 099 (IN)
(74) Representative: Avila, David Victor
(86) International application number: PCT/EP2012/061406
(87) International publication number: WO 2012/172038

(56) References cited:
- WO-A1-2006/032397
- WO-A1-2006/131530
- WO-A1-2010/084039
- US-A- 4 762 636

## Description

### Technical Field

The present invention concerns laundry shading dye compositions.

### Background

WO 2010/084039 (Unilever) discloses a granular laundry detergent composition comprising:
(a) from 0.00005 to 0.2 wt% of a dye granule, wherein the dye granule comprises:
   (i) 20 to 60 wt% of a shading dye;
   (ii) 40 to 80 wt% of a dispersant selected from: ligninsulphonates; alkali metal salts of the condensation products of naphthalenesulphonic acids and formaldehyde; polyvinylsulphonates; and, ethoxylated novolacs;
   (iii) 0 to 10 of wt% auxiliary agents selected from: anionic surfactants; non-ionic surfactants; acidic polymers; and dust proofing oil;
(b) from 5 to 50 wt% of a surfactant;
(c) from 5 to 50 wt% builder selected from: calcium sequestrant materials; precipitating materials; and, calcium ion-exchange materials; and,
(d) 0.05 to 50 wt% a water soluble carrier salt; and,
(e) 0 to 20 wt% other ingredients.

WO 2009/141173 (Unilever) discloses preferably spray dried cationic phenazine or acid azine dye powder which contain 20 to 100 wt% of the dye. Preferably, the dye powder has an average particle size, APS, from 0.1 to 300 microns, preferably 10 to 100 microns. The spray dried dye powder is mixed with a Na₂SO₄ or NaCl or pre-prepared granular base or full detergent formulation to give a 0.1 to 5 dye wt% mixture. This dry mix is then mixed into the granular formulation.

### Summary of Invention

We have found that by lowering level of shading dye in a specific granule composition better benefits are obtained.

In one aspect the present invention provides a granular laundry detergent composition comprising:
(a) from 0.0005 to 0.5 wt%, preferably 0.001 to 0.1wt% of a dye granule, wherein the dye granule comprises:
   (i) 1 to 18 wt%, preferably 10 to 16wt%, of a shading dye;
   (ii) 62 to 99 wt% of a dispersant selected from: ligninsulphonates; alkali metal salts of the condensation products of naphthalenesulphonic acids and formaldehyde; polyvinylsulphonates; and, ethoxylated novolacs;
   (iii) 0 to 20 of wt% auxiliary agents, preferably selected from: anionic surfactants; non-ionic surfactants; polymers; and, dust proofing oil;
(b) from 5 to 50 wt% of a surfactant;
(c) from 5 to 50 wt% builder selected from: calcium sequestrant materials; precipitating materials; and, calcium ion-exchange materials; and,
(d) 0.05 to 50 wt% of a water soluble carrier salt; and,
(e) the remainder to 100 wt% other ingredients.

Preferably the alkali metal salt of the condensation products of naphthalenesulphonic acids and formaldehyde is sodium.

The shading dye preferably has a calculated IogP (octanol-water partition coefficient) of between 0.5 and 3 more preferably between 1.0 and 2.5. Log P values are atom based and calculated using Molecular Modeling Pro (version 5.2.2, © Norgwyn Montgomery Softwear limited).

### Detailed Description of the Invention

### Dye Granules

The granules are preferably formed by drying a liquid slurry or solution of the materials, for example by vacuum drying, freeze drying, drying in drum dryers, Spin Flash ® (Anhydro), but most preferably by spray drying. Most preferably the liquid is water and the shading dye and dispersant are ground before or during the making of the slurry. This grinding is preferably accomplished in mills, such as for example ball, swing, bead or sand mills, or in kneaders. The average particle size of undisolved shading dye in the slurry is preferably less than 1 micron, more preferably less than 0.5 microns, most preferably less than 0.2 microns.

The production of such granules is discussed in WO2006/131530. Such granules are suitably made immediately after synthesis of the dye.

Preferably, the dye granules have an average particle size, APS, from 0.1 to 300 microns, preferably 10 to 100 microns, most preferably 25 to 75 microns. Preferably this is as measured by a laser diffraction particle size analyser, preferably a Malvern HP with 100mm lens.

The dye granules are preferably post-dosed into the powder in a 0.1 to 2 wt% dry mix with an alkali metal salt, preferably Na₂SO₄ or NaCl.

### Shading Dye

Shading dyes deposit to fabric during the wash or rinse step of the washing process providing a visible hue to the fabric.

The shading dyes used in the present invention are blue or violet. In this regard the dye gives a blue or violet colour to a white cloth with a hue angle of 240 to 345, more preferably 260 to 320, most preferably 270 to 300. The white cloth used is bleached non-mercerised woven cotton sheeting.

The shading dye preferably has a calculated logP (octanol-water partition coefficient) of between 0.5 and 3 more preferably between 1.0 and 2.5. Log P values are atom based and calculated using Molecular Modeling Pro (Chem SW ®, version 5.2.2, © Norgwyn Montgomery Softwear limited). Most preferably the dye is uncharged at pH=7.

The dye chromophore is preferably selected from the group comprising: mono-azo, triphenylmethane, naphtholactam, azine and anthraquinone. Most preferably mono-azo, azine and anthraquinone.

Many examples of shading dyes are found in the classes of basic, solvent, acid, direct and disperse dyes.

Preferred shading dyes are:
(1) acid azine dyes as described in WO 2008/017570, preferably acid blue 59, acid blue 98 and acid violet 50.
(2) a cationic azine dye, preferably of the following form blue or violet cationic phenazine dye which is not covalently bound to a negatively charged substituent, the phenazine dye selected from: 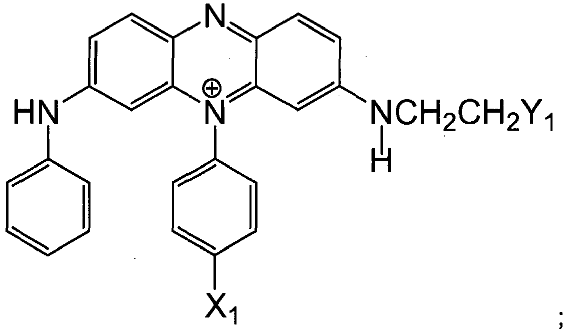 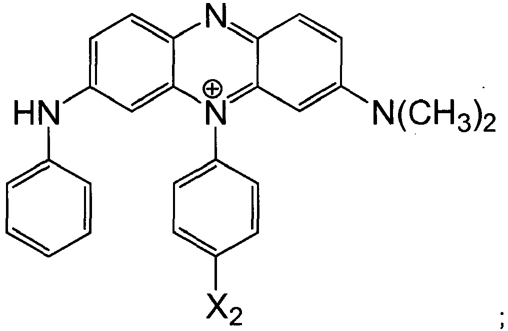 and, 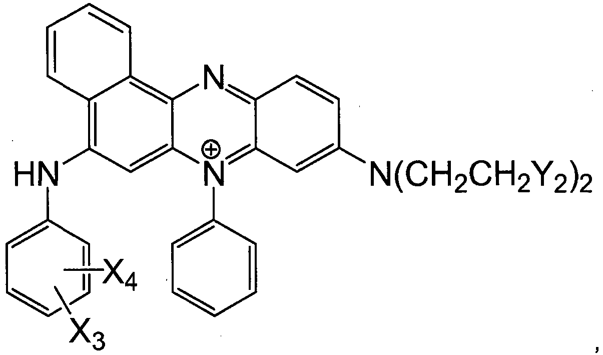 wherein:
   X₁ is selected from: -F; -N(CH₃)₂; -N(CH₂CH₃)₂; -N(H)COCH₃; and, - N(H)COCH₂CH₃;
   X₂ is selected from: -F; -N(CH₃)₂; -N(CH₂CH₃)₂; -N(H)COCH₃; and, - N(H)COCH₂CH₃;
   X₃ is selected from: -H; -F; -CH₃; -C₂H₅; -OCH₃; and, -OC₂H₅;
   X₄ is selected from: -H; -CH₃; -C₂H₅; -OCH₃; and, -OC₂H₅;
   Y₁ is selected from: -OH; -OCH₂CH₂OH; -CH(OH)CH₂OH; and,
   Y₂ is selected from: -OH; -OCH₂CH₂OH; -CH(OH)CH₂OH; -OC(O)CH₃; and, C(O)OCH₃.
(3) cationic azo dyes, preferably cationic mono-azo dyes. The cationic azo dye preferably bear the cationic groups on a chain. The dye may also a bear an anionic group.
(4) hydrophobic dyes as follows:
   (4a) solvent violet 13 and disperse violet 27 and an anthraquinone dye of the following anthraquinone structure (I): 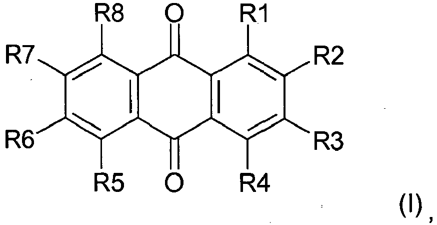 wherein R1, R4, R5, and R8 are independently selected from the groups consisting of-H, -OH, -NH₂, NHCOCH₃ and -NO₂, such that a maximum of only one -NO2 group and a maximum of two -H are present as R1, R4, R5, and R8 substituents;and R2, R3, R6, and R7 is selected from -H, F, Br, Cl or -NO₂, and - Oaryl.
   (4b) mono-azo dye selected from a compound of the following formula: 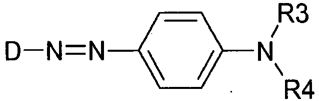
wherein R₃ and R₄ are optionally substituted C2 to C12 alkyl chains having optionally therein ether (-O-) or ester links, the chain being optionally substituted with -Cl, -Br, -CN, -NO₂, and -SO₂CH₃; and, D denotes an aromatic or hetroaromatic group.

The aromatic rings may be further substituted by preferably - -CI, -Br, -CN, CH₃, C₂H₅, -NO₂, -SO₂CH₃ and -NHCOR and R is selected form CH₃, C₂H₅, and CH₂Cl.

Most preferred azo dyes are of the form: 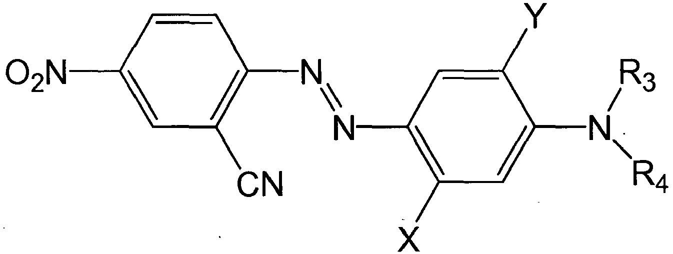 And 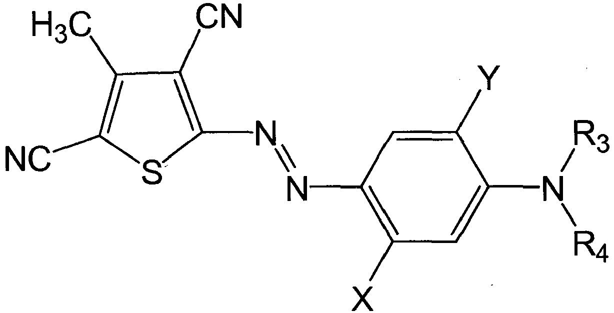 Where X and Y are selected from H, CH₃, C₂H₅, -Cl, -Br, -CN, -NO₂, -SO₂CH₃ and -NHCOR and R is selected form CH₃, C₂H₅, and CH₂Cl. Preferably X is NHCOCH₃ or NHCOCH₂Cl.

Shading of white garments may be done with any colour depending on consumer preference. Blue and Violet are particularly preferred shades and consequently preferred dyes or mixtures of dyes are ones that give a blue or violet shade on white fabrics.

A wide range of suitable solvent and disperse dyes are available. However detailed toxicological studies have shown that a number of such dyes are possible carcinogens, for example disperse blue 1. Such dyes are not preferred.

The following table illustrates calculated logP values for various dyes.

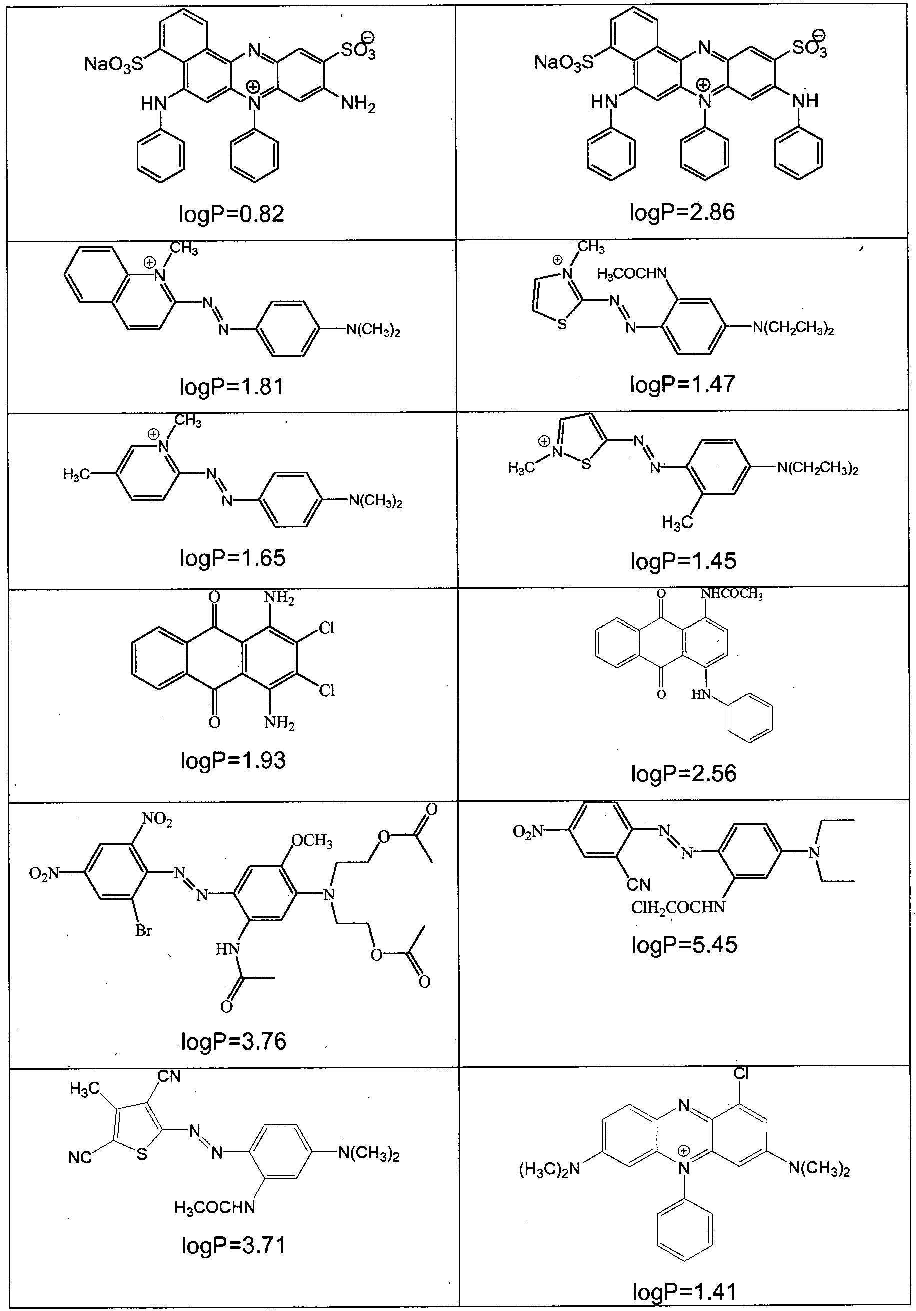

Most preferably the dye used in the invention is disperse violet 28.

### Builder

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetra-acetic acid.

Examples of precipitating builder materials include sodium orthophosphate and sodium carbonate. Preferably, the laundry treatment composition comprises sodium carbonate in the range from 5 to 50 wt%, most preferably 10 to 35 wt%. In the method, when used with granular laundry treatment composition, the aqueous wash solution preferably comprises 0.1 to 4 g/L of sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The composition may also contain 0-65 % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.

Zeolite and carbonate (carbonate (including bicarbonate and sesquicarbonate) are preferred builders.

The composition may contain as builder a crystalline aluminosilicate, preferably an alkali metal aluminosilicate, more preferably a sodium aluminosilicate. This is typically present at a level of less than 15%w. Aluminosilicates are materials having the general formula:

0.8-1.5 M₂O. Al₂O₃. 0.8-6 SiO₂

where M is a monovalent cation, preferably sodium. These materials contain some bound water and are required to have a calcium ion exchange capacity of at least 50 mg CaO/g. The preferred sodium aluminosilicates contain 1.5-3.5 SiO₂ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).

Preferably the laundry detergent formulation is a non-phosphate built laundry detergent formulation, i.e., contains less than 1 wt% of phosphate.

### Enzymes

The composition may comprise one or more enzymes, which provide cleaning performance, fabric care and/or sanitation benefits.

Especially contemplated enzymes include proteases, alpha-amylases, cellulases, lipases, peroxidases/oxidases, pectases, lyases, and mannanases, or mixtures thereof.

Most suitable lipases are disclosed in WO 2007/087257.

### Fluorescent Agent

The composition preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the composition is generally from 0.005 to 2 wt %, more preferably 0.01 to 0.1 wt %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-naphthol[1,2-d]triazole, disodium 4,4'-bis{[(4-anilino-6-(N methyl-N-2 hydroxyethyl) amino 1,3,5-triazin-2-yl)]amino}stilbene-2-2'disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

### Perfume

Preferably the composition comprises a perfume. The perfume is preferably in the range from 0.001 to 3 wt %, most preferably 0.1 to 1 wt %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a formulation. In the compositions of the present invention it is envisaged that there will be four or more, preferably five or more, more preferably six or more or even seven or more different perfume components.

In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.

Perfume and top note may be used to cue the whiteness benefit of the invention.

It is preferred that the laundry treatment composition does not contain a peroxygen bleach, e.g., sodium percarbonate, sodium perborate, and peracid.

### Experimental

### Example

### Spray dried shading dye granules were made of the following wt% composition:-

| Ingredient | Granule number | | | | | |
|---|---|---|---|---|---|---|
| | 1 | 2 | 3 | 4 | 5 | 6 (ref.) |
| Disperse Violet 28 | 5 | 15 | 15 | 15 | 15 | 30 |
| Lignin sulphonate | 95 | 85 | 80 | 80 | 80 | 70 |
| SCMC | - | - | 5 | - | - | - |
| CP5 | - | - | - | 5 | - | - |
| Alkaline silicate | - | - | - | - | 5 | - |

SCMC = sodium carboxymethylcellulose (a polymer).
CP5 = Sokalan® CP5 ex BASF, the sodium salt of an Acrylic acid / Maleic acid co-polymer.

The granules were sieved to give a size fraction from 25 to 75 microns.

The granules were mixed into a detergent powder 18 wt% Linear alkyl benzene sulphonate, 23wt% sodium sulphate, 35wt% light soda ash, 9wt% zeolite, 2wt% sodium tripolyphosphate, 2wt% soap, remainder moisture and minors, so that the detergent powder contained 0.0015wt% of disperse violet 28. The washing powders were then used to wash cloths in a top loading automatic washing machine (1.5g/L powder doseage, 24° French Hard water Liquor to cloth ratio 30:1). After 5 repeat washes the cloth were removed and the colour of the cloth measured using a reflectometer and expressed as the CIE L*a*b* value. The results are given in the table below.

| Granule number | b* | |
|---|---|---|
| | Woven cotton | Woven polyester |
| 1 | -2.7 | -3.2 |
| 2 | -3.7 | -4.2 |
| 3 | -3.4 | -3.8 |
| 4 | -3.4 | -3.9 |
| 5 | -3.6 | -3.9 |
| 6 (reference) | -1.7 | -2.1 |

| | | |
|---|---|---|
| CIE b* measure the yellow (+ve) to blue (-ve) colour axis | | |

The product with best performance give the largest negative b* value.

The level of Disperse Violet 28 in all products was the same.

The products with granules containing 5 and 15wt% Disperse Violet 28 perform significantly better than the product with 30wt% Disperse Violet 28.

## Claims

1. A granular laundry detergent composition comprising:
(a) from 0.0005 to 0.5 wt% of a dye granule, wherein the dye granule comprises:
(i) 1 to 18 wt% of a shading dye;
(ii) 62 to 99 wt% of a dispersant selected from: ligninsulphonates; alkali metal salts of the condensation products of naphthalenesulphonic acids and formaldehyde; polyvinylsulphonates; and, ethoxylated novolacs;
(iii) 0 to 20 of wt% auxiliary agents;
(b) from 5 to 50 wt% of a surfactant;
(c) from 5 to 50 wt% builder selected from: calcium sequestrant materials; precipitating materials; and, calcium ion-exchange materials; and,
(d) 0.05 to 50 wt% of a water soluble carrier salt; and,
(e) the remainder to 100 wt% other ingredients.

2. A granular laundry detergent composition according to claim 1, wherein the shading dye has a calculated logP (octanol-water partition coefficient) of between 0.5 and 3.

3. A granular laundry detergent composition according to claim 1 or 2, wherein the dispersant is a ligninsulphonate and/or the condensation products of naphthalenesulphonic acids and formaldehyde.

4. A granular laundry detergent composition according to any one of the preceding claims, wherein the builder is selected from: carbonates; zeolites; silicates and sodium tripolyphosphate.

5. A granular laundry detergent composition according to any one of the preceding claims, wherein the shading dye is disperse violet 28.

6. A granular laundry detergent composition according to any preceding claim, wherein the composition comprises a fluorescer selected from the group consisting of: sodium 2 (4-styryl-3-sulfophenyl)-2H-naphthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

## Patentansprüche

1. Körnige Waschmittelzusammensetzung,
die Folgendes aufweist:
(a) 0,0005 bis 0,5 Gew.-% eines Farbstoffgranulats, wobei das Farbstoffgranulat Folgendes aufweist:
(i) 1 bis 18 Gew.-% eines Nuancierfarbstoffs;
(ii) 62 bis 99 Gew.-% eines Dispersionsmittels, das ausgewählt ist aus:
Ligninsulfonaten; Alkalimetallsalzen der Kondensationsprodukte von Naphthalinsulfonsäuren und Formaldehyd; Polyvinylsulfonaten; und
ethoxylierten Novolakharzen;
(iii) 0 bis 20 Gew.-% Hilfsmittel;
(b) 5 bis 50 Gew.-% eines Tensids;
(c) 5 bis 50 Gew.-% Builder, der ausgewählt ist aus: Calcium im Komplex bildenden Materialien; fällenden Materialien; und Calciumionen-Austauschmaterialien; und
(d) 0,05 bis 50 Gew.-% eines wasserlöslichen Trägersalzes; und
(e) einen Rest in Form von anderen Bestandteilen bis auf 100 Gew.-%.

2. Körnige Waschmittelzusammensetzung nach Anspruch 1,
wobei der Nuancierfarbstoff einen berechneten logP-Wert (Octanol-Wasser-Aufteilungskoeffizient) von 0,5 bis 3 hat.

3. Körnige Waschmittelzusammensetzung nach Anspruch 1 oder 2,
wobei das Dispersionsmittel ein Ligninsulfonat und/oder die Kondensationsprodukte von Naphthalinsulfonsäuren und Formaldehyd ist.

4. Körnige Waschmittelzusammensetzung nach einem der vorstehenden Ansprüche,
wobei der Builder aus Carbonaten, Zeolithen, Silicaten und Natriumtripolyphosphat ausgewählt ist.

5. Körnige Waschmittelzusammensetzung nach einem der vorstehenden Ansprüche,
wobei der Nuancierfarbstoff Disperse Violet 28 ist.

6. Körnige Waschmittelzusammensetzung nach einem der vorstehenden Ansprüche,
wobei die Zusammensetzung einen Aufheller aufweist, der aus der Gruppe ausgewählt ist, bestehend aus: Natrium-2-(4-styryl-3-sulfophenyl)-2H-naphthol[1,2-d]-triazol, Dinatrium-4,4'-bis{[(4-anilino-6-(N-methyl-N-2-hydroxyethyl)-amino-1,3,5-triazin-2-yl)]amino}stilben-2-2'-disulfonat, Dinatrium-4,4'-bis{[(4-anilino-6-morpholino-1,3,5-triazin-2-yl)]amino}stilben-2-2'-disulfonat und Dinatrium-4,4'-bis(2-sulfostyryl)biphenyl.

## Revendications

1. Composition de détergent de lavage granulaire comprenant :
(a) de 0,0005 à 0,5 % en poids d'un granulé de colorant, dans lequel le granulé de colorant comprend :
(i) de 1 à 18 % en poids d'un colorant nuanceur ;
(ii) de 62 à 99 % en poids d'un dispersant choisi parmi : des sulfonates de lignine, des sels de métaux alcalins des produits de condensation d'acides naphtalènesulfoniques et de formaldéhyde ; des poly(sulfonates de vinyle) ; et, des novolaques éthoxylées ;
(iii) de 0 à 20 % en poids d'agents auxiliaires ;
(b) de 5 à 50 % en poids d'un tensioactif ;
(c) de 5 à 50 % en poids d'un adjuvant choisi parmi : des matériaux séquestrant le calcium ; des matériaux de précipitation ; et, des matériaux d'échange d'ions calcium ; et,
(d) de 0,05 à 50 % en poids d'un sel de support soluble dans l'eau ; et
(e) le reste jusqu'à 100 % en poids d'autres ingrédients.

2. Composition de détergent de lavage granulaire selon la revendication 1, dans laquelle le colorant nuanceur présente un logP calculé (coefficient de partition octanol-eau) de 0,5 à 3.

3. Composition de détergent de lavage granulaire selon la revendication 1 ou 2, dans laquelle le dispersant est un sulfonate de lignine et/ou les produits de condensation d'acides naphtalènesulfoniques et de formaldéhyde.

4. Composition de détergent de lavage granulaire selon l'une quelconque des revendications précédentes, dans laquelle l'adjuvant est choisi parmi : des carbonates ; des zéolites ; des silicates et le tripolyphosphate de sodium.

5. Composition de détergent de lavage granulaire selon l'une quelconque des revendications précédentes, dans laquelle le colorant nuanceur est le violet dispersé 28.

6. Composition de détergent de lavage granulaire selon l'une quelconque des revendications précédentes, dans laquelle la composition comprend un fluorescent choisi dans le groupe constitué par : le 2-(4-styryl-3-sulfophényl)-2H-naphtol[1,2-d]triazole de sodium, le 4,4'-bis{[(4-anilino-6-(N-méthyl-N-2-hydroxyéthyl)amino-1,3,5-triazin-2-yl)]amino}-stilbène-2,2'-disulfonate de disodium, le 4,4'-bis{[(4-amino-6-morpholino-1,3,5-triazin-2-yl)]amino}-stilbène-2,2'-disulfonate de disodium, et le disodium 4,4'-bis(2-sulfostyryl)biphényle.
